Europäisches Patentamt

European Patent Office

Office européen des brevets

(19)

(11) Publication number: **0 096 998**
A1

(12) # EUROPEAN PATENT APPLICATION

(21) Application number: **83303154.5**

(22) Date of filing: **01.06.83**

(51) Int. Cl.³: **F 16 K 3/18,** F 16 K 3/30

(30) Priority: **10.06.82 US 387007**

(43) Date of publication of application: **28.12.83**
Bulletin 83/52

(84) Designated Contracting States: **AT DE FR GB IT**

(71) Applicant: **BARTON VALVE COMPANY INC, Route 1, Box 101 Highway 177 and Acme Road, Shawnee Oklahoma (US)**

(72) Inventor: **Eagan, Duane Marvin, 10 Sunset Road, Marble Head Massachusetts 01945 (US)**

(74) Representative: **Allen, William Guy Fairfax et al, J.A. KEMP & CO. 14 South Square Gray's Inn, London WC1R 5EU (GB)**

(54) **Gate valve and seat therefor.**

(57) An expanding gate valve including a valve body (12) having a cavity (16) formed therein and an inlet (74) and outlet (18) formed in the body, both of which intersect the cavity. A counterbore (92,50) is formed about the circumference of both the inlet and the outlet at their respective intersections with the cavity. An annular seat (72) having a rear surface and a front seat surface is received within the inlet counterbore (92). An annular seal (88) is formed on the front seat surface and a second annular seal (88) is disposed between the rear surface (76) and the valve body. The front annular seal has an outer diameter ($D_2$) greater than the rear annular seal diameter ($D_1$) and an annular recess (84) is formed on the front seat surface on the radially inward side of the annular seal, whereby fluid pressure in said inlet port will tend to urge the valve seat more firmly into the inlet port regardless of the position of the gate (32).

## GATE VALVE AND SEAT THEREFOR

The present invention relates to gate valves.

A conventional gate valve includes a valve body having a cavity formed therein, with an inlet and an outlet, which are usually in axial alignment, being formed in the body and each providing fluid communication between the cavity and the exterior of the valve body. A gate is mounted on the valve body and can be lowered into the cavity for selectively shutting off fluid flow between the inlet and the outlet.

An annular metal seat is usually mounted on the valve body around the circumference of the intersection of both the inlet and the outlet with the cavity; the seats each being pressed into a counterbore. Each seat presents a surface toward the cavity against which the metal gate abuts in order to form a seal. The interior diameter of each seat is generally equal to the diameters of the respective inlet and outlet. Mounted on the front surface of each seat is an annular seal for engaging the surface of the gate, when in the closed position. The gate may be of the so-called "expanding gate" type in which the gate is formed of two or more metal pieces and includes side surfaces which are presented toward each of the seats. When the gate is in the open position, an opening in the gate registers with the centers of the seats to permit fluid flow between the inlet and the outlet. When the opening is moved out of registration with the seats, the gate expands to effect sealing between the gate sides and the seals on the seats thus shutting off the flow between the inlet and the outlet.

Such past gate valves have proved deficient in several respects. When such a valve is used to control the flow of fluids under high pressure, e.g. greater than 3 500 000 kg/sq m, the inlet seat tends to move out of its counterbore when the gate is in the closed position. Since it is difficult to obtain a metal-to-metal seal between the rear of the inlet seat and the bottom of its counterbore, pressurized fluid may enter the space between the seat and the bottom of the counterbore thus tending to push the seat outwardly into the side of the gate. When this happens, tremendous amounts of wear on both the seat and its annular seal occur when the valve gate is moved.

When the gate is in the closed position, high pressure fluid presses the gate against the outlet seat, thus causing wear of the outlet seat, its annular seal, and the side of the gate sealed against the outlet seat.

When the seats are pressed tightly against the gate sides as described above, they tend to tear away or blow out from the seat surfaces when the gate is moved from a closed position to an open position. When the opening in the gate first passes across one side of the seal on, e.g., the outlet seat, fluid pressure in the opening is applied to the radially outer edge of the annular seal, whereas the radially inner edge of the annular seal is at the pressure of the outlet which is usually atmospheric. This pressure differential, applied across one segment of the seal, tends to force it up from the seat surface on which it is mounted, thus destroying the ability of the valve to seal off the inlet from the outlet.

0096998

In an effort to prevent the inlet seat from being blown out of the counterbore in which it is mounted, some designs have used an interference fit between the seat and its counterbore. Such construction requires a press capable of delivering many tonnes of force for securedly fitting the seat into the counterbore. While this may prevent blowing out of the inlet seat, it also prevents its replacement unless such a press is available for applying the necessary force.

In the case where a valve is required for use with high fluid pressures, some designs have utilized seats for both the inlet and the outlet which do not include seals. These seats are designed for providing a metal-to-metal seal against the gate on both the inlet and outlet sides. Such an arrangement is usable under high pressures; however, since high fluid pressure is required to urge the gate against the outlet seat to effect sealing, such seat designs are unworkable at lower pressures, e.g. 50 000 kg/sq m. Accordingly, it may be necessary to utilize a valve of the type having annular seals mounted on the inlet and outlet seats in a low pressure situation and to use a valve of the type for effecting metal-to-metal seals in a high pressure situation. This may necessitate switching valves in an existing installation to facilitate handling of different fluid pressures.

According to the present invention we provide an upstream seal for insertion in an inlet port from the cavity of a gate valve which includes a sliding gate having a surface engaging the seat, said seat having an annular body, a rear surface insertable in the inlet port, a throughbore communicating with the port, a front seat surface engagable with a surface of the gate and a recess

- 4 -

formed in said front seat surface, said recess communicating with the throughbore, whereby fluid pressure in said inlet port will tend to urge the seat more firmly into the inlet port, regardless of the gate position.

Such a seat overcomes the above-enumerated disadvantages inherent in prior art gate valves, because it utilizes the pressure of the fluid in the valve inlet to engage the seat firmly in the inlet port. With such a seat the incidence of seat blowouts is greatly reduced.

According to a further aspect of the invention, there is provided a gate valve comprising a body having a cavity therein, an inlet port and an outlet port communicating with said cavity, a slidable gate, an upstream seat inserted in the inlet port from the cavity, said seat having an annular body, a rear surface inserted in the port, a throughbore communicating with the port, a front seat surface engaged with a surface of the gate and a recess formed in said front seat surface, said recess communicating with the throughbore, whereby flow pressure in said port will tend to urge the seat more firmly into the inlet port, regardless of the gate position.

In order that the present invention will become more fully understood the following description is given, merely by way of example, reference being made to the accompanying drawings, in which:-

FIGURE 1 is a perspective view, shown partly in quartersection, of one embodiment of gate valve constructed in accordance with the present invention;

FIGURE 2 is an enlarged cross-sectional view of a portion of the gate valve of FIGURE 1 showing the gate in its non-expanded condition;

FIGURE 3 is a view similar to FIGURE 2, but with the gate in its expanded condition;

FIGURE 4 is a section of a modified form of seat; and

FIGURE 5 is a front view taken along line 5-5 in FIGURE 4.

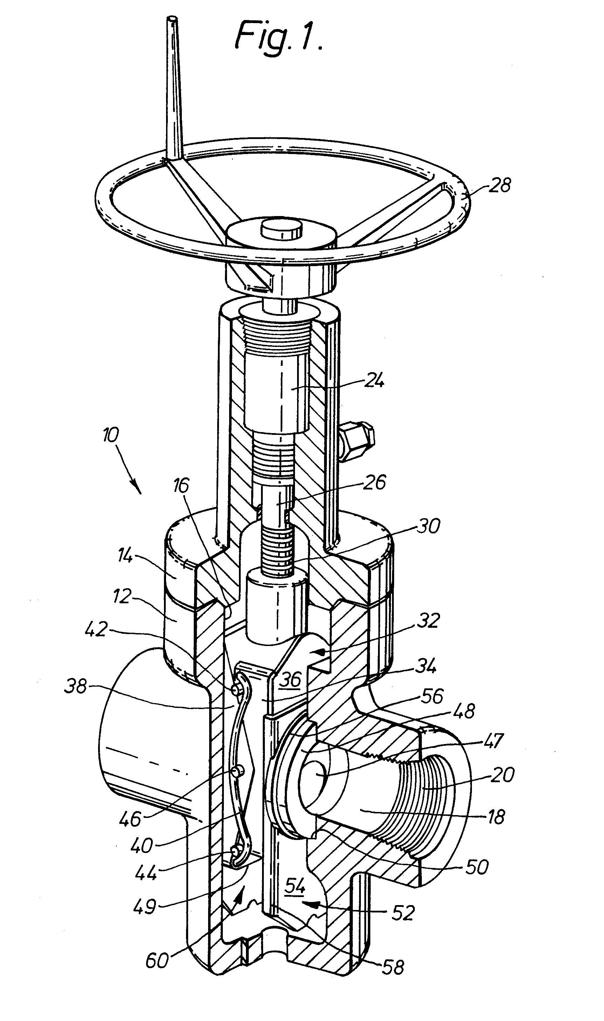

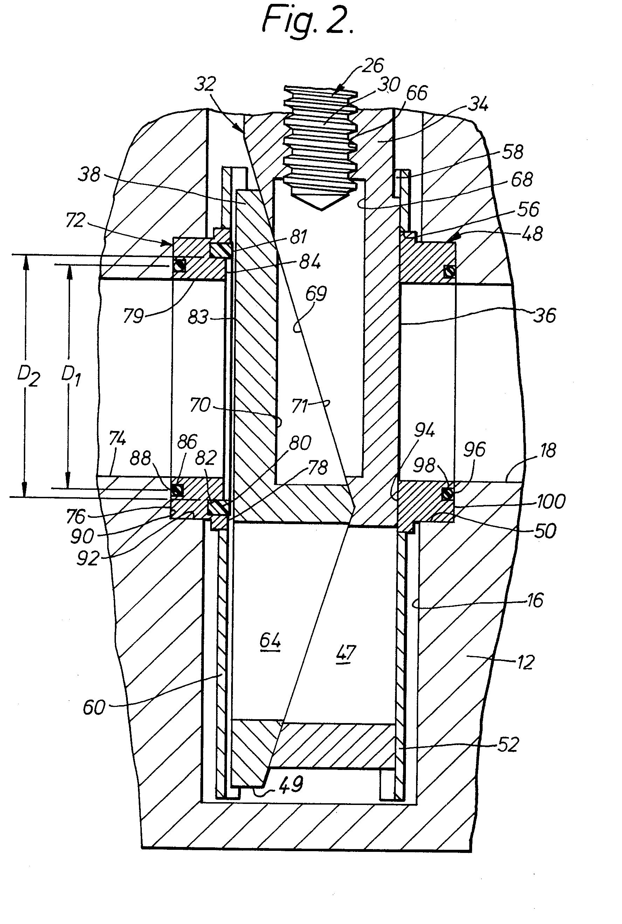

Referring first to Figures 1 and 2, a gate valve 10 includes a valve body 12 and an upper bonnet 14. The valve body includes a cavity 16, having an inlet 74 (Figure 2) and an aligned outlet 18, the inlet and outlet being cylindrical and including threads 20 for connection to a pipe (not shown).

Bonnet 14 is secured to the top of valve body 12 via studs and nuts (not shown). Received within and supported by bonnet 14 is a bearing housing 24 in which is rotatably mounted a stem 26 provided, at its top end with a hand wheel 28 for rotating the stem.

Helical threads 30 on stem 26 threadably engage a threaded bore 66 (Figure 2) at the top of a gate 32. Gate 32 includes a first portion 34 having a surface 36 which is substantially normal to the longitudinal axis of outlet 18. Gate 32 includes a second portion 38 which includes an outward facing surface 83 which faces the inlet and is substantially normal thereto. In order to bias gate portions 34,38 toward each other a pair of springs are mounted, one on each opposite side of the gate. Figure 1 shows one of the springs 40, engaged over studs 42,44 on gate portion 34 and, stud 46 on gate portion 38. A flat lower end of gate portion 38 is indicated at 49.

A circular opening 47 is formed in first gate portion 34 and aligns with a circular opening 64 in the second gate portion. The circular openings are of substantially the same diameter as the outlet 18 and inlet 74 and, when gate 32 is vertically positioned so that opening 47 registers with the inlet and the outlet, fluid may flow freely.

Downstream and upstream annular metal seats 48 and 72 are received within counterbores 50 and 92 formed in valve body 12, surrounding the outlet 18 and inlet 74.

A first gate guide 52 includes a substantially planar portion 54, which abuts against surface 36 of the gate, and has a circular opening 56 which is just large enough to fit over the outside diameter of seat 48. A pair of outward extending edges 58, are formed along either side of portion 54, to provide a channel along which gate portion 34 may move vertically. A second gate guide 60 is substantially identical to gate guide 52 and fits over the annular seat 92 again to provide a channel for vertically guiding second gate portion 38.

The lower end of threaded bore 66 into which stem 26 is screwed communicates with a cavity 68 formed on an angled surface 69 of gate portion 34, which in turn communicates with a corresponding cavity 70 formed on an angled surface 71 of gate portion 38. When surfaces 69, 71 abut each other as shown in Figure 2, neither of cavities 68,70 communicate with the exterior of the gate.

The upstream seat 72 includes a rear surface 76 and a front seat surface 78, formed with an annular groove 82 in which is received an annular seal 80. An annular seal surface 81 is presented by annular seal 80 and by the radially outer portion of surface 78 toward surface 83 of gate portion 38, which is substantially parallel to seal surface 81. The central throughbore 79 of annular seat 72 is of the same diameter as the inlet 74.

An annular recess 84 is formed about the radially inner circumference of seat 72 adjacent annular seal 80. Recess 84 communicates with the interior of seat 72. Rear surface 76 includes an annular channel 86 into which is received an O-ring 88, which provides sealing engagement between rear surface 76 of seat 72 and an end 90 of counterbore 92, which has a diameter which permits seat 72 to be tightly received therein, thus maintaining the seat in the position as shown.

Downstream seat 48 includes a planar front seat surface 94. An O-ring 96 is received within a channel 98 formed in a rear surface 100 of seat 48. Like seat 72, seat 48 is tightly received within its associated counterbore 50 in order to maintain it in position as shown.

In operation, valve 10 is connected to a source of high pressure fluid via inlet 74. Since gate 32 is threadably engaged with stem 26, rotation of the stem forces the gate either upwardly or downwardly dependent upon the direction of stem rotation. For opening the valve to permit fluid flow therethrough, the stem is rotated until opening 64 is aligned with inlet 74, at which point opening 47 is in alignment with outlet 18 thus permitting flow through the valve.

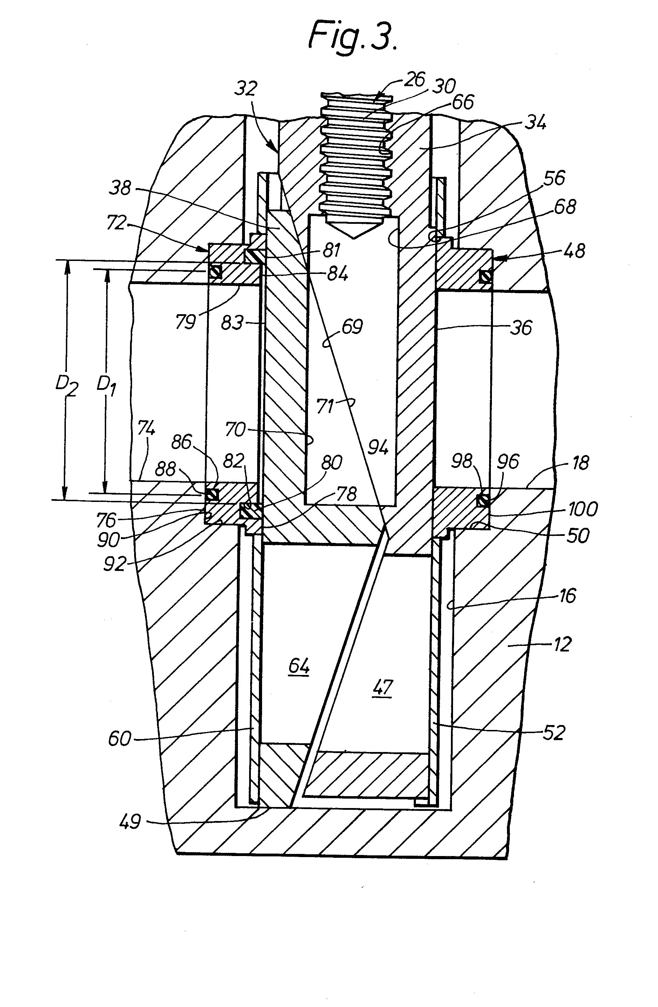

Thereafter, if it is desired to close the valve, handwheel 28 is rotated in the opposite direction, thus forcing gate 32 downwardly so that openings 64, 47 are moved beneath inlet 74 and outlet 18, respectively, as shown in Figure 2. Further downward movement of gate 32 forces lower end 49 of second gate portion 38 against valve body 12. Additional rotation of stem 26 thus forces gate portion 34 slightly more downwardly and forces gate portions 38, 34 toward inlet 74 and outlet 18, respectively, due to the lateral force generated by the sliding of surfaces 69, 71. Thus, in the closed condition of the valve, the components thereof assume the configuration of Figure 3.

The pressurized fluid in inlet 74 is prevented from entering cavity 16 due to the sealing action of annular seal surface 81 against surface 83 of gate portion 38. Recess 84 permits pressurized fluid from inlet 74 to flow between front surface 78 of the seat and surface 83 of gate portion 38. Since 0-ring 88 forms an annular seal having a smaller diameter $D_1$ than the diameter $D_2$ of annular seal 80, the pressurized fluid received in recess 84 forces seat 72 against end 90 of counterbore 92.

The above-described sealed valve condition illustrated in Figure 3 is effective to seal the inlet from the outlet when gases of a very high pressure, e.g. greater than, say, 3,500,000 kg/sq m or of a very low pressure, e.g., 50,000 kg/sq m (as well as pressures therebetween), are present in inlet 74. When high pressure gases are present therein, the force of the gas tends to urge gate 32 against seat 48. An effective metal-to-metal seal is formed between surface 36 of gate portion 34 and front surface 94 of seat 48. Such a seal is generally effective only when high pressures are received within the inlet since a great deal of force is required to effectively generate a non-elastic metal-to-metal seal. A metal-to-metal seal is also found between the radially outer portion of front seat surface 78 and surface 83 when the gate is in its expanded condition.

When low pressure gas is present in inlet 74, insufficient pressure exists to form a metal-to-metal seal between surfaces 36 and 94. However, an effective low pressure seal is formed between annular seal 80 and between surface 83 of gate portion 38. Thus, the valve structure disclosed herein may effectively be used over a wide range of inlet fluid pressures including both low and high pressures.

When it is desired to move the gate from the sealed position in Figure 3 to the unsealed position in Figure 2, stem 26 is rotated to lift end 49 of gate portion 38 from valve body 12. When such is lifted, the springs 40, which bias gate portions 38,34 against each other, urge the gate portions to the position of Figure 2, thus breaking the seal between seat 72 and surface 83. Annular seal 80 is formed of a conventional sealing material which has a lower elasticity than the material from which 0-ring 88 is formed. Thus, the seal formed between surface 81 and surface 83 of gate portion 38 breaks prior to the seal formed between rear surface 76 of seat 72 and end 90 of counterbore 92. If the seal formed by 0-ring 88 were the first to break, pressurized inlet fluid could enter the space between end 90 and rear surface 76 thus forcing seat 72 outwardly against surface 83 of gate portion 38. This condition may cause blowing out of annular seal 80 as well as increased wear on seal 80, seat 72 and gate portion 38. Since 0-ring 88 is more elastic and hence more easily deformably than seal 80, it maintains its sealed condition at least until the seal formed by seal 80 is broken.

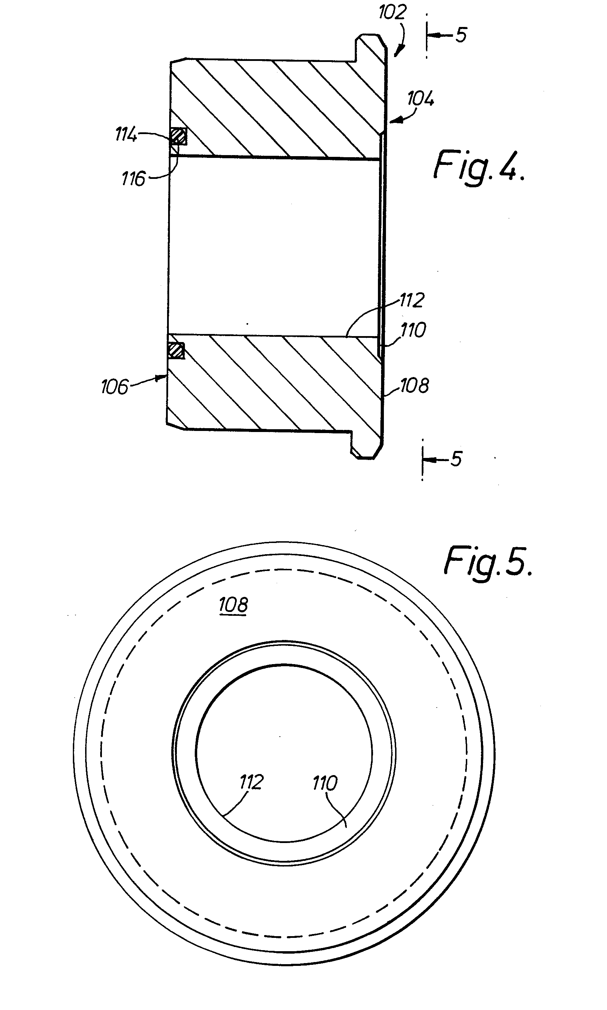

The modified upstream seat 102 of Figures 4 and 5 includes a rear surface 106 and a front surface 104, which includes an annular seal surface 108 and an annular recess 110 formed about the radially inner circumference of seal surface 108. A throughbore 112 permits fluid flow through the seat. The rear surface includes an annular channel 114, of smaller diameter than that of recess 110, and having an 0-ring 116 positioned therein.

The operation of the upstream seat shown in Figures 4 and 5 is much the same as that of Figures 2 and 3. High pressure fluid flows into recess 110 and forces seat 102 into the counterbore in the valve body in which it is received. The effective sealing diameter of 0-ring 116 is less than the diameter of recess 110 thus producing a differntial force which urges the seat into the counterbore into which it is received.

When the valve is in its closed condition, annular seal surface 108 provides a metal-to-metal seal with the facing surface of the gate. It is to be appreciated that conventional ports may be provided in the valve seat which channel lubricants from a source outside the valve body to the face of the seat in order to provide lubrication between the front surface of the seat and the gate and to help effect low pressure sealing.

- 11 -

C L A I M S

1. An upstream seat (72,102) for insertion in an inlet port (74) from the cavity (16) of a gate valve (10), including a slidable gate (32) having a surface 83) engaging the seat, said seat having an annular body, a rear surface (76,106) insertable in the port (74), a throughbore (79,112) communicating with the port and a front seat surface (78,104) engagable with a surface (83) of the gate (32), characterised in that the front seat surface (78,104) is provided with a recess (84,110) which communicates with the throughbore (79,112), whereby fluid pressure in said inlet port will tend to urge the seat more firmly into the inlet port, regardless of the gate position.

2. A seat according to claim 1, characterised in that the front seat surface (78) is additionally provided with an annular seal (80), the inner periphery of which defines the outer periphery of the recess (84).

3. A seat according to claim 1 or 2, characterised in that the rear surface (76) of the seat is provided with a sealing ring (88,116) engagable with an end (90) of a counterbore (92) surrounding said inlet port (74), and in that the diameter ($D_2$) of said recess (84,110) is greater than the diameter ($D_1$) of said sealing ring (88,116).

4. A seat according to claim 3 when appendant to claim 2 characterised in that the elasticity of said annular seal (80) is lower than the elasticity of said sealing ring (88).

5. A gate valve (10) comprising a body (12) having a cavity (16) therein, an inlet port (74) and an outlet port (18) communicating with said cavity, a slidable gate (32), an upstream seat (72,102) inserted in the inlet part from the cavity, said seat having an annular body, a rear surface (76,106) inserted in the port, a throughbore (79,112) communicating with the port and a front seat surface (78,104) engaged with a surface (83) of the gate (32), characterised in that the front seat surface (78,104) is provided with a recess (84,110) which communicates with the throughbore (79,112), whereby fluid pressure in said inlet port will tend to urge the seat more firmly into the inlet port, regardless of the gate position.

6. A gate valve according to claim 5 characterised in that the front seat surface (78) is additionally provided with an annular seal (80), the inner periphery of which defines the outer periphery of the recess (84).

7. A gate valve according to claim 5 or 6, characterised in that the rear surface (76) of the seat is provided with a sealing ring (88,116) in engagement with an end (90) of a counterbore (92) surrounding said inlet port (74), and in that the diameter $(D_2)$ of said recess (84,110) is greater than the diameter $(D_1)$ of said sealing ring (88,116).

8. A gate valve according to claim 7 when appendant to claim 6, characterised in that the elasticity of said annular seal (80) is lower than the elasticity of said sealing ring (88).

9. A gate valve according to claim 5, 6, 7 or 8 characterised in that the outlet port (18) is provided with a counterbore (50), in that a downstream seat (48) is inserted in said counterbore (50) and in that the front surface (94) of said downstream seat is a metal surface directly engagable with the opposing surface (36) of the gate (32).

10. A gate valve according to claim 9 characterised in that the rear surface (100) of the downstream seat (48) is provided with a sealing ring (96) engagable with the end of the associated counterbore (50).

*Fig.1.*

Fig. 2.

Fig.3.

0096998

102

5

104

114

116

Fig.4.

112

110

106

108

5

Fig.5.

108

112

110

# EUROPEAN SEARCH REPORT

European Patent Office

Application number

EP 83303154.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | <u>AT - B - 274 502</u> (ACF INDUSTRIES, INCORPORATED) <br> * Fig. 2 * | 1-3,5-7 | F 16 K   3/18 <br> F 16 K   3/30 |
| A | <u>US - A - 3 689 028</u> (H.G. DICKENSON) <br> * Fig. 1B,4 * | 1-3,5-7 | |
| A | <u>US - A - 2 869 819</u> (R.M. RUCKER) <br> * Fig. 1,2 * | 1,5 | |
| A | <u>US - A - 3 068 901</u> (C.E. ANDERSON) <br> * Column 3, lines 4-10; fig. 1* | 1-3,5-7 | |
| A | <u>DE - C - 967 938</u> (A.S. VOLPIN) <br> * Page 2, column 2, lines 88-95; fig. 1,2 * | 1,5,9 | **TECHNICAL FIELDS SEARCHED (Int. Cl. 3)** <br><br> F 16 K   3/00 |

The present search report has been drawn up for all claims

| Place of search | Date of completion of the search | Examiner |
|---|---|---|
| VIENNA | 22-09-1983 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82